Europäisches Patentamt

European Patent Office

Office européen des brevets

(19)

(11) Veröffentlichungsnummer : **0 046 527**
**B1**

(12) **EUROPÄISCHE PATENTSCHRIFT**

(45) Veröffentlichungstag der Patentschrift :
13.06.84

(51) Int. Cl.³ : **F 16 L 27/12**

(21) Anmeldenummer : **81106164.7**

(22) Anmeldetag : **06.08.81**

(54) **Rohrverbinder für grosskalibrige Stahlrohre, insbesondere für Gaspipelines.**

(30) Priorität : **19.08.80 DE 3031243**

(43) Veröffentlichungstag der Anmeldung :
**03.03.82 Patentblatt 82/09**

(45) Bekanntmachung des Hinweises auf die Patenterteilung : **13.06.84 Patentblatt 84/24**

(84) Benannte Vertragsstaaten :
**BE FR GB IT NL**

(56) Entgegenhaltungen :
DE-A- 2 607 424
DE-C-  864 340
DE-C- 2 411 403
FR-A- 2 229 297
US-A- 2 646 294
US-A- 3 006 665
US-A- 4 225 143

(73) Patentinhaber : **Kempchen & Co. GmbH**
**Aileestrasse 4**
**D-4200 Oberhausen (DE)**
**PLE Pipeline Engineering GmbH**
**Moltkestrasse 76**
**D-4300 Essen 1 (DE)**
**Westdeutsche Schweisswerk- und Rohrleitungsbau GmbH**
**Ruhrorter Strasse 112**
**D-4330 Mülheim-Speldorf (DE)**

(72) Erfinder : **Tückmantel, Hans-Joachim, Dipl.-Ing.**
**Fichtestrasse 104**
**D-4330 Mülheim (Ruhr) 12 (DE)**
Erfinder : **Adams, Werner, Ing.grad.**
**Wattenscheider Hellweg 47**
**D-4630 Bochum 6 (DE)**
Erfinder : **Siemund, Horst, Ing.grad.**
**Worringstrasse 10**
**D-4300 Essen 17 (DE)**
Erfinder : **Klingen, Heinrich**
**Aloysiusstrasse 42**
**D-4047 Dormagen 5 (DE)**

(74) Vertreter : **Andrejewski, Walter et al**
**Patentanwälte Andrejewski, Honke & Partner Postfach 10 02 54 Theaterplatz 3**
**D-4300 Essen 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich gattungsgemäß auf einen Rohrverbinder für großkalibrige Stahlrohre, insbesondere für Gaspipelines, — bestehend aus Degenrohrelement und Muffenrohrelement, wobei das Degenrohrelement an seinem freien Ende einen Anschlagring, das Muffenrohrelement eine vorgeschweißte Gegenanschlaghülse mit Gegenanschlagbund aufweist und das Degenrohrelement in dem Muffenrohrelement axial verschiebbar sowie abwinkelbar ist, wobei außerdem das Muffenrohrelement eine zum freien Ende des Muffenrohrelementes offene Dichtungspackungsaufnahme mit zumindest einer verformbaren Dichtungsanordnung besitzt und wobei endlich in die Dichtungspackungsaufnahme eine Dichtungspackungsspannhülse mit Spannschraubenbund hineinragt, deren Spannschrauben außerdem in einem Schraubenflansch an der Gegenanschlaghülse geführt sowie an diesem unter Zwischenschaltung von Federn abgestützt sind. Ein derartiger Rohrverbinder ist im Oberbegriff von Anspruch 1 beschrieben. Großkalibrig meint im Rahmen der Erfindung Nennweiten im Bereich von etwa 200 bis 1 500 mm. Rohrleitungen aus solchen Rohren erfahren unter Umständen erhebliche Längenänderungen aus thermischen und/oder geologischen Gründen (z. B. in Erdsenkungsgebieten). Um die Längenänderungen aufzunehmen und zu kompensieren, sind die Degenrohrelemente in den Muffenrohrelementen axial verschiebbar. Im übrigen treten, insbesondere aus geologischen Gründen störende Biegemomente auf und folglich in Grenzen Abwinklungen auf, was im Bereich der Dichtungen zu Quer kräften führt.

Bei den (aus der Praxis) bekannten Rohrverbindern der beschriebenen Gattung ist der Anschlagring ein die axiale Verschiebbarkeit definierendes Bauteil. Tatsächlich erfährt die axiale Verschiebbarkeit zwischen Degenrohrelement und Muffenrohrelement einerseits durch die Wechselwirkung von Anschlagring und Gegenschlagring, andererseits durch Anstoßen des Anschlagringes am an die Rohrleitung angeschlossenen Muffenende ihre Begrenzung. Das konstruktiv vorgegebene Spiel zwischen Anschlagring und Innenwand des Muffenrohrelementes sowie Gegenanschlagbund und Außenwand des Degenrohrelementes ist verhältnismäßig groß und liegt im Bereich von 2 bis 10 mm. Das hält man für erforderlich, um in dem Rohrverbinder bei auftretenden Biegemomenten eine Abwinklung zwischen Degenrohrelement und Muffenrohrelement zuzulassen, ohne daß durch zu große, biegemomentbedingte Abstützung des Anschlagringes am Muffenrohrelement sowie des Gegenanschlagbundes am Degenrohrelement in bezug auf die axiale Verschiebung störende Zwänge oder sogar Blockierungen auftreten. Die Dichtungsanordnung muß die beschriebenen Bewegungen zulassen bzw. mitmachen. Sie ist daher verformbar und als sogenannte Bleilamellendichtung aus Bleiband und Asbestschnureinlage gewickelt. Die Dichtungsanordnung erfährt bei den beschriebenen Bewegungen von Degenrohrelement und Muffenrohrelement gegeneinander abrasive Beanspruchungen und, insbesondere bei auftretenden Biegemomenten, bleibende Verformungen, was im Ergebnis zu Undichtigkeiten führt. Das ist der Grund, weshalb die Dichtungsanordnung insgesamt als Packungsdichtung ausgeführt und durch die Dichtungspackungsspannhülse mit ihren Spannschrauben nachspannbar ist. Tatsächlich muß dieses Nachspannen in arbeitsaufwendiger Weise (Aufgraben der Rohrverbinder bei erdverlegten Rohrleitungen) immer wieder und oft in kurzen Zeitabständen erfolgen. Die bekannten Rohrverbinder sind daher unter den angegebenen Beanspruchungen nicht langzeitig dicht. Daran ändert nichts die Tatsache, daß häufig Einrichtungen zu einer zusätzlichen Fetteinspeisung vorgesehen sind, wodurch insbesondere die abrasive Beanspruchung reduziert werden soll.

In anderen Bereichen der Technik, so bei Achslagern und Stelltrieben mit axialer Verstellung, kennt man Lagerringe aus gegenüber dem Werkstoff Stahl weichem Werkstoff, und zwar auch aus Polytetrafluoräthylen oder aus einer Mischung von Bronzepulver und Polytetrafluoräthylen. Man spricht insoweit auch von Polytetrafluoräthylenringen, die mit Bronzepulver gefüllt sind. Die Probleme um die langlebige Dichtheit der bekannten Rohrverbinder sind dadurch bisher nicht beeinflußt worden. Im übrigen kennt man in der Dichtungstechnik (DE-C-24 11 403) Dichtungsringe für Dichtungspackungen, die Stahlkappen und Schnurwicklungen aus Asbest und dergleichen aufweisen. Auch kennt man für andere Dichtungszwecke, nämlich zur Dichtung zwischen Flanschen (FR-A-22 29 297), Dichtungsringe mit aneinander anschliessenden Ringbereichen, deren mittlerer aus einem inkompressiblen, verformungsfähigen Dichtungswerkstoff besteht und deren innerer und äußerer den inkompressiblen Dichtungswerkstoff beim Anziehen der Flansche unter elastischer Verformung abstützen. Die Verwendung einer entsprechend adaptierten Dichtungsanordnung bei einem bekannten Rohrverbinder des beschriebenen Aufbaus allein bringt keine Beseitigung der eingangs beschriebenen Probleme.

Der Erfindung liegt die Aufgabe zugrunde, einen gattungsgemäßen Rohrverbinder so weiter auszubilden, daß er unter den eingangs beschriebenen Beanspruchungen langzeitig dicht ist, ohne daß die Dichtungspackung des Nachspannens bedarf.

Zur Lösung dieser Aufgabe lehrt die in Anspruch 1 definierte Erfindung, daß der Anschlagring mindestens einen in eine eingedrehte Nut eingelegten, gegenüber dem Werkstoff Stahl weichen Abwinklungsbegrenzungsring aufweist, der gegenüber der Innenwand des Muffenrohrelementes ein Abstandsspiel von maximal 1 mm, vorzugsweise 0,5 mm und weniger, freiläßt, und daß die Dichtungsanordnung außenseitige Stahlkappen, daran angeschlossene Schnurwickelringe sowie einen Dichtungskern aus inkompressiblen, plastisch verformbarem Kunststoff aufweist. Erfindungsgemäß wirken die beschriebenen Merkmale in funktioneller Verschmelzung. Infolge der Anordnung des Abwinklungsbegrenzungsringes wird der Winkel, um den das Degenrohrelement gegenüber dem Muffenrohrelement bei auftretenden Biegemomenten abwinkelbar ist, beachtlich reduziert und praktisch zu null. Zwar wird das Biegemoment über den Abwinklungsbegrenzungsring an der Innenwand des Muffenrohrelementes abgestützt, da es sich jedoch um einen Ring aus einem gegenüber dem Werkstoff Stahl weichen Werkstoff handelt, treten störende Zwänge in bezug auf die für den Rohrverbinder wesentliche axiale Verschiebbarkeit des Degenrohrelementes gegenüber dem Muffenrohrelement nicht auf. Blockierungen werden nicht beobachtet. Da bei auftretenden Biegemomenten der Winkel der Abwinklung klein ist, erfährt die Dichtungsanordnung auch nur kleine Verformungen. Infolge der Kombination der Schnurwickelringe mit dem inkompressiblen, elastisch verformbaren Kunststoff, unter Zwischenschaltung der Stahlkappen zur Erzeugung homogener und isotroper Druckverhältnisse in der Dichtungsanordnung selbst, wird sichergestellt, daß bei Bewegungen des Degenrohrelementes gegenüber dem Muffenrohrelement die Dichtungsanordnung die Bewegungen ohne bleibende Verformungen mitmacht. Folglich sind die erfindungsgemäßen Rohrverbinder unter den eingangs angegebenen Beanspruchungen langzeitig dicht. Besonders ausgeprägt ist der beschriebene Effekt einer autogenen Kompensation der Verformungen der Dichtungsanordnung, wenn dafür Sorge getragen wird, daß bei Abwinklungen die auf die Dichtungsanordnung wirkenden Kräfte begrenzt bleiben. Das erreicht man nach bevorzugter Ausführungsform dadurch, daß auch der Gegenanschlagbund in besonderer Weise weiter ausgebildet ist, und zwar zumindest einen in eine eingedrehte Nut eingelegten, gegenüber dem Werkstoff Stahl weichen Abstützring aufweist, der gegenüber der Außenwand des Degenrohrelementes ein Abstandsspiel von maximal 1 mm, vorzugsweise 0,5 mm und weniger, freiläßt.

Für den Abwinklungsbegrenzungsring und für den Abstützring können grundsätzlich die verschiedensten Werkstoffe eingesetzt werden. Es versteht sich von selbst, daß diese Ringe so dimensioniert werden, daß zerstörende Flächenpressungen nicht auftreten. Eine bevorzugte und bewährte Ausführungsform der Erfindung ist dadurch gekennzeichnet, daß der Abwinklungsbegrenzungsring und der Abstützring als mit Bronzepulver gefüllte Ringe aus Polytetrafluoräthylen ausgeführt sind. Bei dieser Ausführungsform der Erfindung erreicht man ohne weiteres auch eine ausreichende Selbstschmierung, so daß auf eine Fetteinspeisung im allgemeinen verzichtet werden kann. Das schließt nicht aus, vorsichtshalber mit einer zusätzlichen Fetteinspeisung zu arbeiten. Nach bevorzugter Ausführungsform der Erfindung besitzt auch die Dichtungsanordnung einen Dichtungskern aus Polytetrafluoräthylen, während die Schnurwickelringe aus Asbestschnur bestehen. Im allgemeinen wird man zwei Dichtungsanordnungen des beschriebenen Aufbaus vorsehen und zwischen diesen einen Stützring anordnen. Die Dichtungsanordnungen können je aus zwei Dichtungsringen mit einerseits Stahlkappe und andererseits Dichtungshalbkern aus Kunststoff sowie dazwischen angeordneten Schnurwickelringen aufgebaut sein. Es versteht sich von selbst, daß ein erfindungsgemäßer Rohrverbinder werkstoffmäßig so ausgelegt wird, daß störende korrosive Beanspruchungen nicht auftreten. Aus diesem Grunde kann mit üblicher Feuerverzinkung gearbeitet werden. Eine solche Feuerverzinkung empfiehlt sich jedoch auch aus anderen, nicht nur korrosionsbedingten Gründen. Tatsächlich fördert die Feuerverzinkung auch die Selbstschmierung der verschiedenen, nach bevorzugter Ausführungsform der Erfindung eingesetzten Ringe aus oder mit Polytetrafluoräthylen als Werkstoff.

Im folgenden wird die Erfindung anhand einer lediglich ein Ausführungsbeispiel darstellenden Zeichnung ausführlicher erläutert. Es zeigen in schematischer Darstellung:

Figur 1 einen Axialschnitt durch einen erfindungsgemäßen Rohrverbinder,

Figur 2 im gegenüber der Fig. 1 wesentlich vergrößerten Maßstab den Ausschnitt A aus dem Gegenstand nach Fig. 1 und

Figur 3 im Maßstab der Fig. 2 den Ausschnitt B aus dem Gegenstand nach Fig. 1.

Der in den Figuren dargestellte Rohrverbinder ist für großkalibrige Stahlrohre der eingangs gegebenen Nennweiten bestimmt, und zwar insbesondere für Gaspipelines. In seinem grundsätzlichen Aufbau besteht der Rohrverbinder aus einem Degenrohrelement 1 und einem Muffenrohrelement 2.

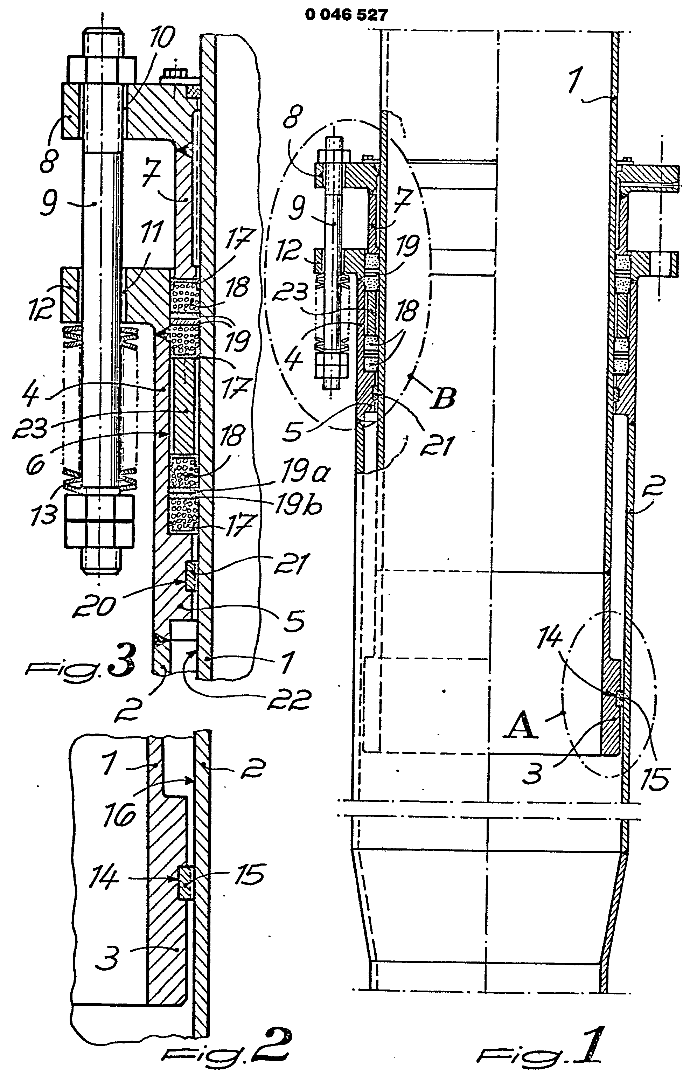

Das Degenrohrelement 1 besitzt an seinem freien Ende einen Anschlagring 3. Das Muffenrohrelement 2 ist mit einer vorgeschweißten Gegenanschlaghülse 4 versehen, die ihrerseits einen Gegenanschlagbund 5 aufweist. Aus der Fig. 1 entnimmt man ohne weiteres, daß das Degenrohrelement 1 in dem Muffenrohrelement 2 verschiebbar und in Grenzen abwinkelbar ist. Das Muffenrohrelement 2 besitzt eine zum freien Ende des Muffenrohrelementes 2 offene Dichtungspackungsaufnahme 6. In die Dichtungspackungsaufnahme 6 ragt eine Dichtungspackungsspannhülse 7 hinein, die ihrerseits einen Spannschraubenbund 8 trägt. Die Spannschrauben 9 sind in Bohrungen 10 des Spannschraubenbundes 8 und außerdem in Bohrungen 11 eines zugeordneten Schraubenflansches 12 an der Gegenanschlaghülse 4 geführt. Sie sind an dem Schraubenflansch 12 unter Zwischenschaltung von Federn 13 gestützt.

Insbesondere aus der Fig. 2 entnimmt man, daß der Anschlagring 3 im Ausführungsbeispiel einen in eine eingedrehte Nut 14 eingelegten Abwinklungsbegrenzungsring 15 aufweist. Dieser besteht aus einem gegenüber dem Werkstoff Stahl weichen Werkstoff. Er mag in die Nut 14 eingeklebt sein. Im übrigen ist die Anordnung so getroffen, daß der Abwinklungsbegrenzungsring 15 gegenüber der Innenwand 16 des Muffenrohrelementes 2 ein Abstandsspiel von maximal 1 mm, vorzugsweise nur 0,5 mm und weniger, freiläßt. Aus Maßstabsgründen ist dieses Spiel in den Figuren folglich gar nicht erkennbar.

Aber auch die Dichtungsanordnung 17, 18, 19 ist in besonderer Weise gestaltet, wie sich aus der Fig. 3 ergibt. Man erkennt, daß die Dichtungsanordnung außenseitig Stahlkappen 17, daran angeschlossen Schnurwickelringe 18 sowie einen Dichtungskern 19 aus einem inkompressiblen, plastisch verformbaren Kunststoff aufweist.

Im Ausführungsbeispiel und nach bevorzugter Ausführungsform der Erfindung trägt auch der Gegenanschlagbund 5 zumindest einen, in einer eingedrehten Nut 20 eingelegten Ring 21 aus einem gegenüber dem Werkstoff Stahl weichen Werkstoff. Dieser Ring 21 funktioniert als Abstützring bei auftretenden Biegebeanspruchungen und auch hier ist die Anordnung so getroffen, daß der Abstützring 21 gegenüber der Außenwand 22 des Degenrohrelementes 1 ein Abstandspiel von maximal 1 mm, vorzugsweise nur 0,5 mm und weniger, freiläßt. Nicht erkennbar ist in den Figuren, daß der Abwinklungsbegrenzungsring 15 sowie der Abstützring 21 als mit Bronzepulver gefüllte Ringe aus Polytetrafluoräthylen ausgeführt sind. Die Dichtungsanordnung 17, 18, 19 besitzt einen Dichtungskern 19 aus Polytetrafluoräthylen, während die Schnurwickelringe 18 aus Asbestschnur gewickelt sind.

Im Ausführungsbeispiel und nach bevorzugter Ausführungsform der Erfindung sind zwei Dichtungsanordnungen 17, 18, 19 des beschriebenen Aufbaus vorgesehen und zwischen diesen ist ein Stützring 23 angeordnet. Jede der Dichtungsanordnungen 17, 18, 19 besteht ihrerseits aus zwei Dichtungsringen mit einerseits Stahlkappe 17, andererseits Dichtungshalbkern 19a, 19b aus inkompressiblem Kunststoff und dazwischen angeordneten Schnurwickelringen 18. Das Degenrohrelement 1 kann zumindest auf seiner Außenseite, das Muffenrohrelement 1 zumindest innenseitig mit einer durch Feuerverzinkung aufgebrachten Zinkschicht versehen sein. Eine solche Beschichtung bringt nicht nur den üblichen Korrosionsschutz sondern verbessert in Kombination mit den beschriebenen Maßnahmen auch die axiale Verschiebbarkeit.

**Ansprüche**

1. Rohrverbinder für großkalibrige Stahlrohre, insbesondere für Gaspipelines, bestehend aus Degenrohrelement (1) und Muffenrohrelement (2), wobei das Degenrohrelement an seinem freien Ende einen Anschlagring (3), das Muffenrohrelement (2) eine vorgeschweißte Gegenanschlaghülse (4) mit Gegenanschlagbund (5) aufweist und das Degenrohrelement in dem Muffenrohrelement axial verschiebbar sowie abwinkelbar ist, wobei außerdem das Muffenrohrelement eine zum freien Ende des Muffenrohrelementes offene Dichtungspackungsaufnahme (6) mit zumindest einer verformbaren Dichtungsanordnung besitzt und wobei endlich in die Dichtungspackungsaufnahme eine Dichtungspackungsspannhülse (7) mit Spannschraubenbund (8) hineinragt, deren Spannschrauben (9) außerdem in einem Schraubenflansch (12) an der Gegenanschlaghülse geführt sowie an diesem unter Zwischenschaltung von Federn abgestützt sind, dadurch gekennzeichnet, daß der Anschlagring (3) zumindest einen in eine eingedrehte Nut (14) eingelegten, gegenüber dem Werkstoff Stahl weichen Abwinklungsbegrenzungsring (15) aufweist, der gegenüber der Innenwand (16) des Muffenrohrelementes (2) ein Abstandsspiel von maximal 1 mm, vorzugsweise 0,5 mm und weniger, freiläßt, und daß die Dichtungsanordnung (17, 18, 19) außenseitige Stahlkappen (17), daran angeschlossene Schnurwickelringe (18) sowie einen Dichtungskern (19) aus inkompressiblem, plastisch verformbaren Kunststoff aufweist.

2. Rohrverbinder nach Anspruch 1, dadurch gekennzeichnet, daß der Gegenanschlagbund (5) zumindest einen in eine eingedrehte Nut (20) eingelegten, gegenüber dem Werkstoff Stahl weichen Abstützring (21) aufweist, der gegenüber der Außenwand (22) des Degenrohrelementes (1) ein Abstandsspiel von maximal 1 mm, vorzugsweise nur 0,5 mm und weniger, freiläßt.

3. Rohrverbinder nach einem der Ansprüche 1 oder 2, dadurch gekennzeichnet, daß der Abwinkelbegrenzungsring (15) und der Abstützring (21) als mit Bronzepulver gefüllte Ringe aus Polytetrafluoräthylen ausgeführt sind.

4. Rohrverbinder nach einem der Ansprüche 1 bis 3, dadurch gekennzeichnet, daß die dichtungsanordnung (17, 18, 19) einen Dichtungskern (19) aus Polytetrafluoräthylen und Schnurwickelringe (18) aus Asbestschnur aufweist.

5. Rohrverbinder nach einem der Ansprüche 1 bis 4, dadurch gekennzeichnet, daß zwei Dichtungsanordnungen (17, 18, 19) des beschriebenen Aufbaus vorgesehen und zwischen diesen ein Stützring (23) angeordnet ist.

6. Rohrverbinder nach einem der Ansprüche 1 bis 5, dadurch gekennzeichnet, daß die Dichtungsanordnung (17, 18, 19) je aus zwei Dichtungsringen mit einerseits Stahlkappe (17), andererseits Dichtungshalbkern (19a, 19b) aus Kunststoff sowie dazwischen angeordneten Schnurwickelringen (18) besteht.

**Claims**

1. A pipe connector for large calibre steel pipes, particularly for gas pipelines, consisting of a telescopic pipe unit (1) and a socket pipe unit (2), in which the telescopic pipe unit (1) possesses an impact ring (3) at its open end and the socket pipe unit (2) possesses a pre-welded anti-impact collar (4) with anti-impact flange (5) at its open end, and the telescopic pipe unit is axially movable in the socket pipe unit and can also be angularly deflected therein, in which the socket pipe unit also possesses a receptacle for sealing packing (6), open towards the open end of the unit, with at least one deformable sealing device, and finally in which a sealing packing tightening collar (7) with a tightening screw flange (8) projects into the receptacle for sealing packing, the tightening screws (9) also passing through a screw flange (12) on the anti-impact collar against which it is supported by a means of springs, characterized in that the impact ring (3) possesses at least one angular deflection limitation ring (15) soft in relation to steel and inserted into a recessed groove (14), which leaves free a clearance play of a maximum of 1 mm, preferably 0.5 mm or less, relatively to the inner wall (16) of the socket pipe unit (2), and that the sealing device (17, 18, 19) possesses external steel caps (17), wound rope rings (18) attached to them, and a seal core (19) consisting of incompressible, plastically deformable plastics.

2. A pipe connecter according to Claim 1, characterized in that the anti-impact flange (5) possesses at least one support ring (21), soft in relation to steel and inserted into a recessed groove (20) which leaves free a clearance play of a maximum of 1 mm, preferably 0.5 mm or less, relatively to the outer wall (22) of the telescopic pipe unit (1).

3. A pipe connected according to one of Claims 1 or 2, characterized in that the angular deflection limitation ring (15) and the support ring (21) are produced as for example rings of polytetrafluorethylene loaded with bronze powder.

4. A pipe connector according to one of Claims 1 to 3, characterized in that the sealing device (17, 18, 19) possesses a seal core (19) of polytetrafluorethylene and wound rope rings (18) of asbestos rope.

5. A pipe connector according to one of Claims 1 to 4, characterized in that two sealing devices (17, 18, 19) of the construction described are provided, and a support ring (23) is located between them.

6. A pipe connector according to one of Claims 1 to 5, characterized in that each sealing device (17, 18, 19) consists of two sealing rings with a steel cap (17) on one side, a sealing half-core of plastics (19a, 19b) on the other side, and also rings of wound rope (18) located between them.

**Revendications**

1. Raccord de tuyauterie pour tubes d'acier de gros calibre, notamment pour des gazoducs, constitué par un élément de tube enfichable (1) et un élément de tube formant manchon (2), et dans lequel l'élément de tube enfichable comporte sur son extrémité libre un anneau de butée (3), l'élément de tube formant manchon (2) comporte une douille de butée antagoniste (4) comportant un collet de butée antagoniste (5), et l'élément formant tube enfichable est déplaçable axialement dans l'élément de tube formant manchon et peut être disposé obliquement, et dans lequel en outre l'élément de tube formant manchon possède un logement (6) de garniture d'étanchéité, ouvert vers son extrémité libre, comportant au moins un dispositif d'étanchéité déformable, et dans lequel enfin dans le logement de la garniture d'étanchéité pénètre une douille (7) de serrage de la garniture d'étanchéité possédant un collet (8) pour vis de serrage et dont les vis de serrage (9) sont en outre guidées dans une collerette (12) pour vis ménagée sur la douille de butée antagoniste et prennent appui contre cette collerette moyennant l'interposition de ressorts, caractérisé par le fait que l'anneau de butée (3) possède au moins une bague (15) de limitation d'obliquité, molle par rapport au matériau qu'est l'acier et insérée dans une gorge (14) tournée dans la masse, et qui libère par rapport à la paroi intérieure (16) de l'élément de tube formant manchon (2), un jeu égal au maximum à 1 mm, de préférence à 0,5 mm et moins et que le dispositif d'étanchéité (17, 18, 19) comporte des capuchons métalliques extérieurs (17), des anneaux (18) de bobinage en fil raccordés à ces capuchons, ainsi qu'un noyau d'étanchéité (19) constitué par une matière plastique incompressible, élastiquement déformable.

2. Raccord de tuyauterie selon la revendication 1, caractérisé en ce que le collet de butée antagoniste (5) comporte au moins une bague d'appui (21) molle par rapport au matériau qu'est l'acier et insérée dans une gorge (20) tournée dans la masse et qui libère, par rapport à la paroi extérieure (22) de l'élément de tube enfichable (1), un jeu égal au maximum à 1 mm, et de préférence seulement à 0,5 mm et moins.

3. Raccord de tuyauterie suivant l'une des revendications 1 ou 2, caractérisé en ce que la bague (15) de limitation de l'obliquité et la bague d'appui (21) sont réalisées sous la forme de bagues constituées par du polytétrafluoroéthylène et remplies par du bronze moulu.

4. Raccord de tuyauterie selon l'une des revendications 1 à 3, caractérisé en ce que le dispositif d'étanchéité (17, 18, 19) comporte un noyau d'étanchéité (19) en polytétrafluoroéthylène et des anneaux de bobinage en fil (18) constitués par un fil d'amiante.

5. Raccord de tuyauterie selon l'une des revendications 1 à 4, caractérisé en ce que deux dispositifs d'étanchéité (17, 18, 19) possédant la structure décrite sont prévus et qu'une bague d'appui (23) est disposée entre ces dispositifs.

6. Raccord de tuyauterie selon l'une des revendications 1 à 5, caractérisé en ce que le dispositif d'étanchéité (17, 18, 19) est constitué par deux bagues d'étanchéité comportant d'une part un capuchon en acier (17), d'autre part des demi-noyaux d'étanchéité (19a, 19b) en matière plastique ainsi que des anneaux de bobinage en fil (18) montés entre ces éléments.

0 046 527

Fig. 3

Fig. 2

Fig. 1